# EUROPEAN PATENT APPLICATION

(11) **EP 1 467 295 A1**
(43) Date of publication of application: **13.10.2004**
(21) Application number: 03100937.6
(22) Date of filing: 08.04.2003
(51) Int. Cl.: G06F 17/60

(54) **Communication system for a logistic chain**

(71) Applicant: van Brummen, John, 1054 ZV Amsterdam (NL)
(72) Inventor: van Brummen, John, 1054 ZV Amsterdam (NL)
(74) Representative: de Vries, Johannes Hendrik Fokke

(57) **Abstract**

The invention relates to a communication system (1) for a logistic chain (5) for objects (35) having associated unique identifiers comprising at least one communication server (2) and a plurality of communication units (3) along said logistic chain (5), at least one of said communication units (3) being adapted to retrieve said unique identifiers from said objects (35) and to transmit said identifiers to said communication server (2) via a network (4). The at least one communication unit (3) is adapted to transmit contact data of said communication unit (3) to said communication server (2) on or after retrieving said unique identifier and said communication server (2) is adapted to provide access to at least said contact data on or after reception of at least said unique identifier. By adding such a communication system (1) to a logistic chain (5) direct personal contact with the people using or being responsible for the communication unit (3) and being physically or actually involved with the handling of the objects (35) is provided.

## Description

The invention relates to a communication system for a logistic chain for objects having associated unique identifiers comprising at least one communication server and a plurality of communication units along said logistic chain, at least one of said communication units being adapted to retrieve said unique identifiers from said objects and to transmit said identifiers to said communication server via a network.

Logistics can be broadly divided in mail, parcels and express that are generally handled on a per-item basis and air freight, sea freight and land freight that are mostly capacity brokered by independent middlemen. Communication and collaboration along logistic chains is increasingly difficult because of problems arising from the fact that different countries, time zones, languages and companies are involved, said companies often using incompatible computersystems. This situation gives rise to problems such as loss of goods, incorrect delivery, inefficient routing of the objects, inflexibility and increased costs.

In the prior art efforts have been made to improve this situation. For objects handled on a per-item basis often only a single company is involved for transporting such an item from sender to receiver. Such companies offer their customers tracking systems allowing the sender to keep track of the sent items along the logistic chain. In such a system the sender is e.g. provided with a unique number, such as an airway-bill number, associated with his order, providing him access to a tracking system made available to him via e.g. the internet.

EP 1 189 163 discloses a method and system for managing a logistic process and tracking of items along a logistic chain. The logistic chain comprises a sender and a receiver and several intermediaries providing transport services. The method involves using at least one radio frequency identification device or RFID read/write device in association with at least one item of the logistic chain. An RFID tag is provisioned along the logistic chain with logistic data concerning delivery, receipt or status of the item. Logistic data are transmitted to a central dataprocessing system.

A problem associated with the prior art tracking systems is that they mainly allow passive observation of the object in the logistic chain.

It is an object of the invention to provide a system that allows for intervention in the logistic chain.

This object is achieved by providing a communication system for a logistic chain characterized in that said at least one communication unit is adapted to transmit contact data of said communication unit to said communication server on or after retrieving said unique identifier and said communication server is adapted to provide access to at least said contact data on or after reception of at least said unique identifier. By adding such a communication system to a logistic chain, the facility of direct personal contact with the people using or being responsible for the communication unit and being physically or actually involved with the handling of the objects is provided. Thus, by having access to the specific contact data, direct contact can be made with the personnel actually having handled, handling or about to handle the object in case of e.g. late delivery of the object, damage of the objects, loss of the object or just concern. As a result the amount of needless telephone calls or contacts is reduced and those calls made are directed to the appropriate person. This is especially advantageous in capacity brokered freight wherein many different companies are used for the transportation of the object. The contact data preferably relate or relates to a (mobile) phone number, but may also relate to other data, such as an e-mail address.

In an embodiment of the invention the communication server is further adapted to build up a tracing data-string indicating actual properties of said communication units in said logistic chain on or after reception of at least said unique identifier from said communication units. The tracing data-string is linked to the unique identifier and accessible with said unique identifier, thus adding tracing functionality to the communication system. The contact data may be part of the tracing data-string.

In an embodiment of the invention at least one communication unit is adapted to transmit a tracing data-substring indicating actual properties of said at least one communication unit in said logistic chain to said communication server and said communication server is adapted to generate a comparison result from comparing said actual properties with intended properties, defined for said logistic chain. From the comparison result it can be determined whether the object follows the originally planned route, defined by the intended properties.

In a preferred embodiment of the invention the communication system is adapted to transmit said unique identifier to one or more of said communication units associated with intended properties of said logistic chain. This provides the advantage that users not or not yet having physically or actually handled the object may have access to the contact data and/or the tracing data-string, i.e. both reactive and proactive contact are possible. Especially the receiver of the object may be provided with the unique identifier and thus is allowed to directly contact parties having handled or about to handle the object, since the contact data of these parties are accessible by him.

In a preferred embodiment of the invention the unique identifier is provided by a radio frequency identification (RFID)-tag attached to said object. RFID tags have the advantage that they can easily be provided with a unique code or number that can be retrieved from the tag without requiring a line of sight between the reader and the tag. Preferably passive RFID-tags are used since they are light and less expensive than active RFID-tags, allowing for economically viable disposable tags. The tags may be attached to or packaged with or within the object to be transported.

The invention further relates to a communication server for contacting a plurality of communication units along a logistic chain of objects having associated unique identifiers, at least one of said communication units being adapted to retrieve said unique identifiers from said objects and to transmit said unique identifiers over a network characterized in that said communication server is adapted to receive contact data of said at least one communication unit on or after retrieval of said unique identifier and to provide access to at least said contact data on or after reception of said unique identifier. By linking the unique identifier to the contact data, information is provided with respect to the person using or being responsible for the communication unit that retrieved the unique identifier. This information or contact data can be accessed by providing the unique identifier of the object to the communication server.

Preferably the communication server comprises a routing suggestion module for defining intended properties of an intended routing data-string and, preferably, a learning module in communicative contact with said suggestion module. Such a communication server may especially assist the sender of an object in deciding on e.g. the most convenient or most utilized way of transportation. The routing suggestion module and learning module are adapted to assist in setting up the intended routing data-string e.g. by providing geo-routing clues in combination with a personal routing history maintained over time to gather personal routing clues.

The invention further relates to a communication unit for a logistic chain of objects having associated unique identifiers, said communication unit being adapted to retrieve said unique identifiers from said objects and to transmit said unique identifiers to a communication server via a network characterized in that said communication unit is adapted to transmit contact data of said communication unit to said communication server on or after retrieving said unique identifier. By transmitting the contact data the communication server is provided with data of the person using or being responsible for the communication unit that retrieved and transmitted the unique identifier.

In an embodiment of the invention the communication unit comprises a tracing data-substring indicating actual properties of said at least one communication unit in said logistic chain and is adapted to transmit said tracing data-substring on retrieval of said unique identifier. Preferably the tracing data-substring is transmitted automatically on retrieval of the unique identifier.

In a preferred embodiment of the invention the communication unit comprises a mobile device, preferably a mobile phone. This provides a convenient way to achieve direct personal contact with the person having physically handled the object.

In a preferred embodiment of the invention, the communication unit is associated with a mailbox adapted to receive at least said unique identifier, said contact data and, preferably, intended and actual properties of other communication units in said logistic chain. The communication unit may comprise a directory and folder structure adapted to orderly store at least said unique identifiers and said contact data. This arrangement of data in the communication unit assists in having a clear view of the logistic processes and allows the organization of a multitude of logistic processes that the person handling or responsible for the communication unit is participating in.

The invention will be further illustrated with reference to the attached drawings, which show a preferred embodiment according to the invention.
Fig. 1 shows a logistic chain and a communication system according to an embodiment of the invention;
Fig. 2 shows a timing-chart for processes involved in a communication system as displayed in Fig. 1;
Fig. 3 shows a communication unit according to an embodiment of the invention.

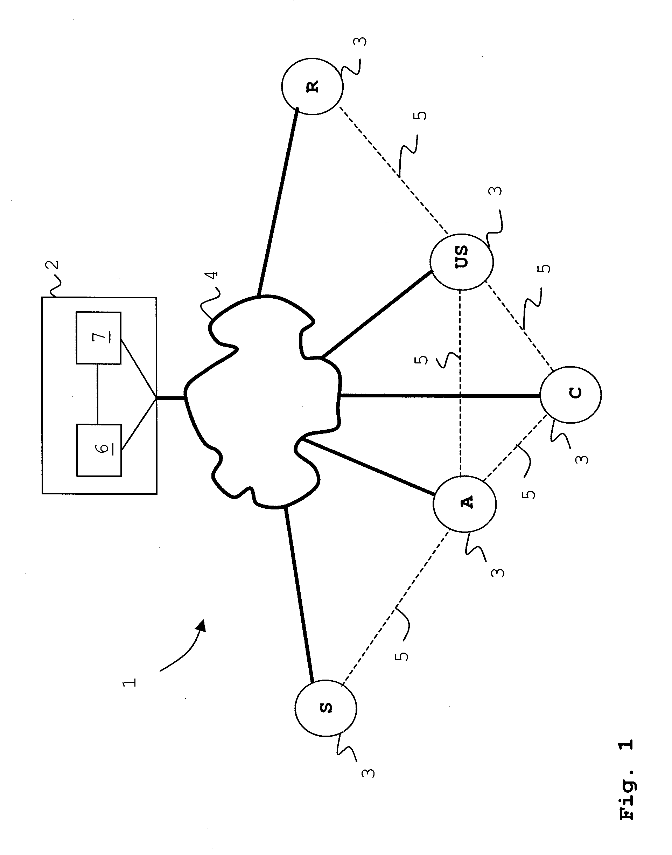

Fig. 1 illustrates a communication system 1 comprising a communication server 2 and a plurality of communication units 3 connected via a network 4. The communication server 2 and the communication units 3 will hereinafter also be referred to as server 2 and units 3. The units 3 are labeled S, A, US, C, R to identify the parties S, A, C and R using a unit 3 and the point-of-contact US in the United States having or associated with such a unit 3 . The network 4 preferably comprises a wireless network allowing wireless connection of the units 3 with the server 2.

The units 3 are provided along a logistic chain 5, indicated by the dashed line, such that communication between the object and the unit 3 for retrieving a unique identifier of the object is allowed. The units 3 of S, A, C and R are mobile or handheld units, such as a mobile phone or a personal digital assistant (PDA), while the unit 3 associated with US is a fixed unit, e.g. a tunnel detector. The mobile units and tunnel detector are adapted to retrieve the unique identifier from a radio frequency identifier (RFID) tag attached to the object, wherein the mobile units may themselves comprise sufficient hardware for retrieval of the unique identifier or may include an external RFID-reading device. Thus a mobile communication unit 3 may e.g. comprise a mobile phone connected via e.g. Bluetooth or WIFI to a RFID-reading device.

The logistic chain 5 preferably relates to objects such as capacity brokered cargo. It is further noted that the concept 'logistic chain' should be broadly interpreted as it not necessarily relates to the 'external' transport of objects. Instead a logistic chain may also relate to the transport of an object in e.g. a production process within a factory or the distribution of e.g. a document within an organization. The server 2 comprises a route suggestion module 6 and a learning module 7.

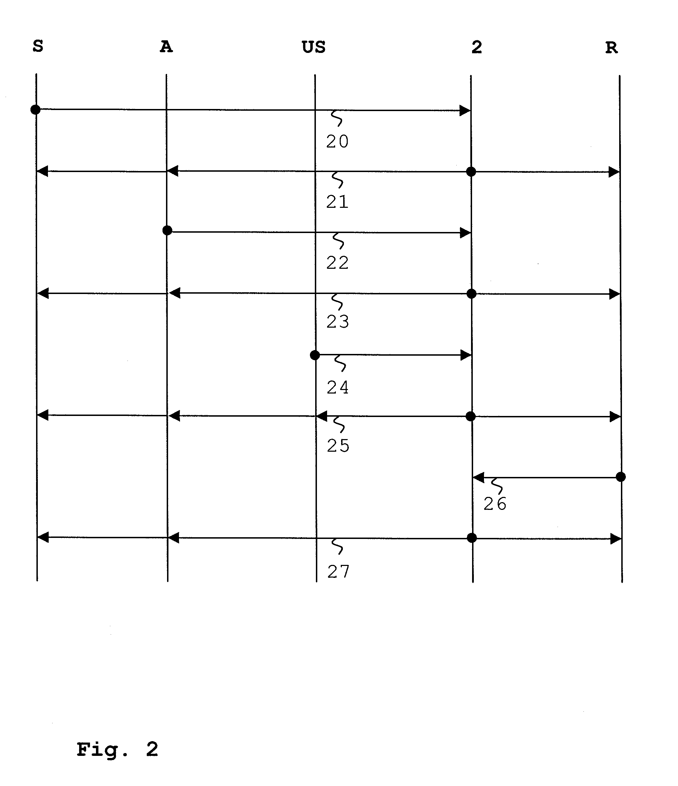

Fig. 2 shows a process diagram illustrating an example of using the communication system 1 shown in Fig. 1. Horizontally the parties participating in the logistic chain 5 and the server 2 are displayed, whereas vertically time is displayed. In this example the logistic chain 5 comprises a sender S, a broker A, an unknown intermediate US in the United States and a receiver R for transportation of an object from the sender S to the receiver R. Only these parties are assumed to have communication units 3.

A passive RFID-tag comprising a unique identifier is first attached to or packaged with or within the object, e.g. by the sender S. In step 20 the unique identifier is transmitted to the server 2 together with an intended routing data-string comprising intended properties for the logistic chain 5. The intended properties may be left blank by using wildcards for the appropriate field or may be constrained by defining a sequence of point-of-contact patterns that match dedicated proximities, the planned proximity servicing and/or the required connecting transportation. For the constrained point-of-contact patterns the granularity may range from very limited to very extensive, depending e.g. on the required precision.

Various proximity methods can be distinguished such as a zip-code proximity method, wherein a point-of-contact is constrained to a zip-code proximity, or a hub-proximity method, wherein a point-of-contact is constrained to a hub proximity, e.g. airport, seaport, ground station or warehouse. Furthermore various service methods can be distinguished such as a transport service method wherein a point-of-contact is constrained to a transport service (e.g. airfreight; seafreight; groundfreight; mail; parcel; express), a broker service method wherein a point-of-contact is constrained to a transport broker service (e.g. airfreight broker; seafreight broker; groundfreight broker) and a checkpoint service method wherein a point-of-contact is constrained to a checkpoint service (e.g. airport customs; airport security; seaport customs; seaport security; ground customs; ground security). Moreover additional constraints can be added relating to e.g. dates or times.

Assume sender S is to send the object to the receiver R and requires broker A, providing brokering services in Amsterdam, The Netherlands, to handle the object as part of the logistic chain 5. The intended routing data-string may e.g. read: "ZIP:NL:1062XK:*:00 31 6 511930, AB:NL:AMS:A:00 31 6 0390115,AP:US:*:*,ZIP:US:MN55337:*:00 01 612 2223 343:2003/Mar/28". In this intended routing data-string the first set of intended properties relates to the sender S employing the zip-code proximity method, the second set relates to the broker A employing the broker service method, the third set relates to an airport in the United States having unknown other data indicated by wildcards *, the fourth set relates to the receiver R again employing the zip-code proximity method. In this example the contact data, i.e. the telephone numbers, of sender S, broker A and receiver R are included in the intended routing data-string. It is further noted that the sender S should not necessarily include his contact data and/or the contact data of the receiver R in the intended routing data-string. As indicated the intended routing data-string provisioned by the sender S may include contact data of other point-of-contacts, such as the telephone number of the receiver R. Further additional data are provided such as the intended date of arrival of the object at R. These additional data may propagate through the intended routing data-string to preceding point-of-contacts. However, any point-of-contact may also have its own additional data, such as e.g. a date of arrival for the object at broker A.

The intended routing data-string is transmitted to the server 2 in step 20 with or following reading of or retrieving the unique identifier associated with the object. The server 2 links the unique identifier of the object to the intended routing data-string.

In step 21 the server 2 transmits the unique identifier of the object to the mailboxes of the communication units 3 of each party or contact identified in the intended routing data-string, i.e. S, A and R. Moreover the server 2 builds up a tracing data-string comprising contact data of the communication unit 3 of S. Preferably the tracing data-string provides also other actual data of the site associated with the communication unit 3 according to e.g. the zip-code proximity method in this case. The tracing data string may e.g. read "ZIP:NL:1062XK:180:00 31 6 5110930". This tracing data-string may be transmitted to the units 3 of S, A and R as well or maintained at the server 2. In the latter case S, A and R may retrieve or have access to the tracing data-string, or a part thereof such as the contact data, by using the unique identifier. Further also the intended routing data-string may be transmitted to the units 3 of S, A and R or being retrieved by S, A and R from the server 2 using the unique identifier. Preferably the server 2 first builds up the tracing data-string and subsequently transmits or makes available this data-string to the units 3.

When the object arrives at the broker A, the communication unit 3 associated with A retrieves the unique identifier from the RFID-tag attached to the object by a handheld device 3. On retrieval of the unique identifier the identifier is transmitted to the server 2 together with at least the contact data of the handheld device, being e.g. another telephone number 00 31 6 0390115, as indicated by step 22. Moreover in step 22 a tracing data-substring with actual properties of airfreight broker A in Amsterdam, The Netherlands, can be transmitted to the server 2. The actual properties of A can be implemented employing the broker service method.

In step 23 the server 2 provides access to or transmits the contact data of A after reception of the unique identifier to contacts involved i.e. S, A and R. If e.g. the receiver R wants to obtain information on the status of the object, R, having obtained the unique identifier in step 21, may directly contact the person having retrieved the unique identifier from the object, since R has access to the telephone number of the unit 3 employed in A, being 00 31 6 0390115 in the example. Moreover, the tracing data-string at the server 2 is built up further by including the actual properties AB:NL:AMS:A of the tracing data-substring of airfreight broker A. The server 2 compares these actual properties with the intended properties of the intended routing data-string with regard to the proximity and the comparison result is positive, i.e. the intended properties match the actual properties.

In step 24 the object has arrived at an airport in the United States, indicated by US in Fig. 1. The communication unit 3 at the airport in the US is a tunnel detector, wherein the RFID-tag of the object is scanned on passing of the tunnel detector. The unique identifier is retrieved from the tag and transmitted to the server 2 together with contact data associated with the tunnel detector 3. This contact data may e.g. relate to the telephone number 00 01 612 2223 343 of the floor manager responsible for the particular tunnel detector 3 or an account manager. Moreover in step 24 a tracing data-substring with actual properties of the airport can be transmitted to the server 2. The actual properties of the airport in the US can be implemented employing the hub-proximity method, e.g. "AP:US:JFK:G23". The airport in the US thus appears to be JFK airport in New York and the object is scanned at gate G23. It is noted that the contact data of the communication unit having retrieved the unique identifier may be included in the actual properties, i.e. the tracing data-substring may read: "AP:US:JFK:G23:00 01 612 2223 343".

In step 25 the server 2 provides access to or transmits the contact data of the communication unit 3 at the JFK New York airport after reception of the unique identifier to S, A, R and possibly US. If e.g. the broker A wants to obtain information on the status of the object he may directly contact the floor manager of the tunnel detector 3. Moreover, the tracing data-string at the server 2 is extended with the actual properties AP:US:JFK:G23 of the tracing data-substring of the tunnel detector 3 of the airport in the US. The server 2 compares these actual properties with the intended properties of the routing data-string with respect to the proximity and the comparison result is positive, since the routing data-string comprises wildcards here for the location of the airport and the gate. Optionally the communication unit 3 at the JFK New York airport may also be provided with access to the contact data and/or the intended routing data-string and/or the tracing data-string, as indicated by the arrow in Fig. 2.

Finally when the receiver R receives the object, he may retrieve the unique identifier from the RFID-tag whereupon the tracing data-substring and/or the contact data is added to the tracing data-string at the server 2, indicated by step 26. By comparing the tracing data-string with the intended routing data-string with respect to the proximity the comparison result learns that the object has arrived at his destination. Parties S, A, R and possibly US are supplied with the contact data of R in step 27 and, possibly, with an alert signal that the transportation of the object is completed successfully.

It should be clear that the above described process with reference to Fig. 2 only presents a relatively simple example of the operation of the communication system 1 of Fig. 1. Several modifications can be envisaged, some of which will be described below.

Ease of use in route specification and suggestion of possible routes in accordance with personal experience may precede step 20 by prompting the route suggestion module 6, wherein the intended routing data-string is suggested in accordance with e.g. the sender and receiver proximity. A proximity geography may be applied to provide geo-routing clues, whereas a personal routing history can maintained in the learning module 7 over time to gather personal routing clues. The personal routing clues may take priority over the geo-routing clues. To create, change or further refine a route a route edit method may be employed, wherein the intended routing data-sting is created or edited by adding or changing point-of-contact patterns.

Ease of use may alternatively or additionally be provided by making use of global positioning systems (GPS) or mobile positioning systems (MPS) for determination of the proximity. Such systems are able to determine a position of the communication unit 3 which position can subsequently be translated to a proximity. A communication unit 3 may e.g. use GPS to determine its position and communicate this position to the server 2. The server 2 is adapted to derive a proximity from the received position. The user of the communication unit 3 may be allowed to amend the proximity thus derived or determined. In MPS also the server 2 itself may determine the position of the communication unit 3 and subsequently derive a proximity.

In Figs. 1 and 2 not only the sender S, the receiver R, the broker A and the airport in the US may use a communication unit 3, but e.g. also parties transporting the object between these parties. Moreover customs between The Netherlands and the United States may use a communication unit 3. The parties involved in transportation and customs can be identified in the intended routing data-string or the tracing-data-(sub)string by employing point-of-contact patterns such as the transport service method and the checkpoint service method described above. According to an embodiment of the invention contact data of thethese communication units are transmitted to the server 2 as well. The server 2 links these contact data to the unique identifier and provides access to these contact data on reception of the unique identifier from e.g. another party in the logistic chain 5.

In Fig. 1 an additional party C is present in the logistic chain 5. Suppose that broker A sends the object to C instead of the airport in the US. C may have a communication unit 3 retrieving the unique identifier from the object and sending the contact data of the communication unit 3 to the server 2. These contact data are subsequently accessible for or transmitted to e.g. the sender S and the receiver R. Moreover the communication unit 3 of C may transmit a tracing data-substring to the server 2. This tracing data-substring may e.g. have actual properties "SP:US:NY:K95" indicating that the object actually is at the seaport of New York at quay K95. The server 2 may include the tracing data-substring of the communication unit 3 of C in the tracing data-string in the server 2. The comparison result obtained by comparing the intended routing data-string with the tracing data-string with regard to the proximity is negative, i.e. the actual routing does not match the intended route. This result may be transmitted from the server 2 to the communication units 3 alerting the parties of the exception. The receiver R may e.g. directly contact the person at C that retrieved the unique identifier from the object for further instructions.

It is noted that the generation of the comparison result can be used also for tracking systems, without using the communication system according to the invention. By employing the proximity-methods described above a user can indicate the amount of deviation allowed from an intended routing for the object. A negative comparison result is generated when the actual properties of an tracing data-substring deviate exceed the allowed deviation. For example an intended routing data-string reading "*:US:*:*" yields a negative comparison result only when the unique identifier is retrieved outside the United States. Another example is the intended routing data-string reading "*:*:*:*:2003/Mar/28", such that a negative comparison result is generated if the unique identifier is not retrieved from the object before or on March 28, 2003. The latter case may e.g. be used for checking whether the object has arrived with a receiver R before the due date. Apart from deviations from the intended route, according to the invention other exceptions can be communicated to the communication units 3 as well. As the sender S may indicate a date or time as additional data in the intended routing data-string, an exception signal can be generated if a deviation is observed from the indicated time or date. E.g. if the object described with respect to Fig. 2 does not arrive at R before or on March 28, 2003, an exception signal can be generated at the server 2. In this way e.g. the sender S may contact the person handling or being responsible for the object at that moment and provide him with additional instructions. Other exceptions may relate to checks with respect to customs or security. If the object fails to pass a custom check parties in the logistic chain are informed and provided with the contact data of the customs holding the object.

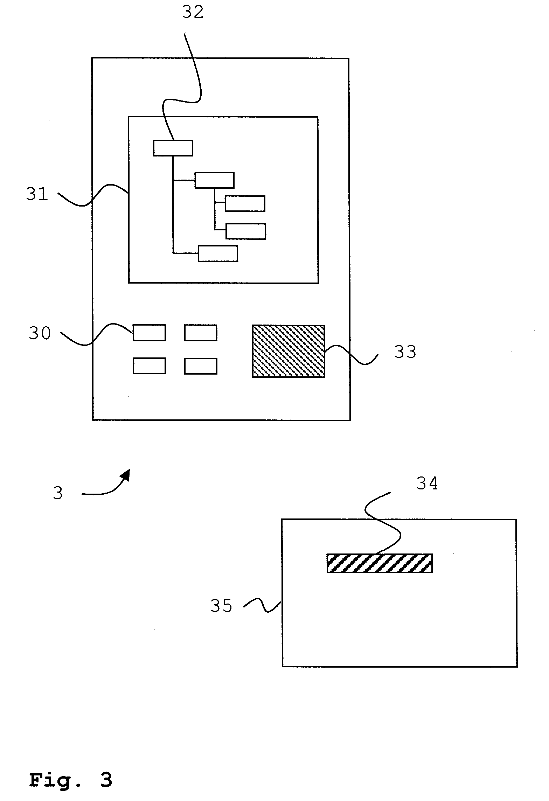

Direct personal contact with co-workers of a variety of different corporate backgrounds and geography is one of the key aspects of the invention. The provision of the contact data at or from the server 2 guarantees that the involved contacts have been physically involved in or responsible for handling of the object. Further future contacts can already be identified. The communication unit 3, shown in Fig. 3, has keys that can be used for navigation purposes or have assigned navigation functionality, such as: go-to-start, go-back, home, go-forward, and go-to-end to select the appropriate personal contact, and uses a quick-dial button to direct-call the selected person. Both sender S and receiver R can contact anybody within the routing data-string or tracing data-string directly without resorting to time consuming indirect calls through call centers trying to pin-point the appropriate worker.

The communication units 3 may use a browsing method employing the navigation keys 30 and an interface 31, wherein the unit 3 is adapted to retrieve the unique identifier, to upload the unique identifier to the server 2 to get access to the contact data, and optionally, the intended routing data-string and the tracing data-string, by using navigation keys such as: go-to-start, go-back, home, go-forward, and go-to-end to browse the intended routing data-string and the tracing data-string. As handheld navigation happens in the field short attention spans for navigation are preferred.

The amount of intended routing- and tracing data-strings requires a suitable interface 31 for the communication units 3, shown in Fig. 3. The communication units 3 preferably are associated with a mailbox with definable directories and folders 32 allowing organization of a multitude of intended routing and tracing data-strings in which the communication unit participates. This mailbox preferably is an active mailbox that automatically distributes the incoming data to the appropriate directories and folders 32. The mailbox may further dynamically add or remove data from the folders 32 in accordance with the progress of the object along the logistic chain 5. Further it is possible that the incoming data are stored in several folders. Continuous refreshment or refreshment at short time intervals of the contents of the folders is preferred to provide the user with almost real-time information of the logistic processes. It should be appreciated that this mailbox may be present at the server 2 instead of in the communication unit 3.

The user of a communication unit 3 may transfer a string or set of strings to another communication unit by forwarding the string or set of strings to such a communication unit, similar to forwarding electronic mail (e-mail).

The communication unit 3 displayed in Fig. 3 further comprises a sensor 33 for retrieving the unique identifier from the RFID-tag 34 of the object 35. Tag 34 preferably is a passive RFID-tag.

The invention is not restricted to the above described embodiment which can be varied or expanded in a number of ways within the scope of the claims, by e.g. providing the possibility to link the communication system to the computer systems of the parties in the logistic chain 5. A point-of-contact may be uploaded to a URL after point-of-contact has been traced, matmatched, checked, and added to the tracing data-string. The URL e.g. denotes the network address of a Web-based back-office upload method for any kind of back-office system. This allows existing back-office solutions for Supply Chain Management (SCM), Supply Chain execution (SCX), and Enterprise Resource Planning (ERP) to benefit from the communication system according to the invention to achieve visibility of order progress in complex, non-homogeneous, outsourced, and often multi-national supply chains.

Also the communication units 3 should not necessarily comprise the tracing data-substring themselves. Instead the tracing data-substrings may be manually input to the communication unit 3. Alternatively the communication unit 3 may scan a tag worn by a worker, wherein said tag comprises the actual properties for the tracing data-substring associated with the communication unit 3. Moreover a worker ID can be used having associated actual properties stored in the server 2.

## Claims

1. Communication system (1) for a logistic chain (5) for objects (35) having associated unique identifiers comprising at least one communication server (2) and a plurality of communication units (3) along said logistic chain (5), at least one of said communication units (3) being adapted to retrieve said unique identifiers from said objects (35) and to transmit said identifiers to said communication server (2) via a network (4)
**characterized in that**
said at least one communication unit (3) is adapted to transmit contact data of said communication unit (3) to said communication server (2) on or after retrieving said unique identifier and said communication server (2) is adapted to provide access to at least said contact data on or after reception of at least said unique identifier.

2. Communication system (1) according to claim 1, wherein said communication server (2) is further adapted to build up a tracing data-string indicating actual properties of said communication units (3) in said logistic chain (5) on or after reception of at least said unique identifier from said communication units (3).

3. Communication system (1) according to claim 1 or 2, wherein said at least one communication unit (3) is adapted to transmit a tracing data-substring indicating actual properties of said at least one communication unit (3) in said logistic chain (5) to said communication server (2) and said communication server (2) is adapted to generate a comparison result from comparing said actual properties with intended properties, defined for said logistic chain (5).

4. Communication system (1) according to any one of the preceding claims, wherein said system (1) is adapted to transmit said unique identifier to one or more of said communication units (3) associated with intended properties and/or actual properties and/or contact data of communication units (3) in said logistic chain (5).

5. Communication system (1) according any one of the preceding claims, wherein said unique identifier is provided by a RFID-tag (34) attached to or packaged with or within said object (35).

6. Communication server (2) for contacting a plurality of communication units (3) along a logistic chain (5) for objects (35) having associated unique identifiers, at least one of said communication units (3) being adapted to retrieve said unique identifiers from said objects (35) and to transmit said unique identifiers over a network (4)
**characterized in that**
said communication server (2) is adapted to receive contact data of said at least one communication unit (3) on or after retrieval of said unique identifier and to provide access to at least said contact data on or after reception of said unique identifier.

7. Communication server (2) according to claim 6, wherein said communication server (2) comprises a routing suggestion module (6) for defining intended properties of an intended routing data-string and, preferably, a learning module (7) in communicative contact with said suggestion module.

8. Communication unit (3) for a logistic chain (5) for objects (35) having associated unique identifiers, said communication unit (3) being adapted to retrieve said unique identifiers from said objects (35) and to transmit said unique identifiers to a communication server (2) via a network (4)
**characterized in that**
said communication unit (3) is adapted to transmit contact data of said communication unit (3) to said communication server (2) on or after retrieving said unique identifier.

9. Communication unit (3) according to claim 8, wherein said communication unit (3) comprises a tracing data-substring indicating actual properties of said at least one communication unit (3) in said logistic chain (5) and is adapted to transmit said tracing data-substring on retrieval of said unique identifier.

10. Communication unit (3) according to claim 8 or 9, wherein said communication unit (3) is adapted to define an intended routing data-string comprising intended properties for said logistic chain (5).

11. Communication unit (3) according to any one of the claim 8-10, wherein said communication unit (3) comprises a mobile device, preferably a mobile phone.

12. Communication unit (3) according to any one of the claims 8-11, wherein said communication unit (3) is associated with a mailbox adapted to receive at least said unique identifier, said contact data and, preferably, intended and/or actual properties of other communication units (3) in said logistic chain (5).

13. Communication unit (3) according to claim 12, wherein said communication unit (3) comprises an interface (31) with a directory and folder structure (32) adapted to orderly store at least said unique identifiers and said contact data.

14. Communication server (2) according to claims 6 or 7 and communication unit (3) according to any one of the claims 8-13 for use in a communication system (1) according to any one of the claims 1-5.
